# EUROPEAN PATENT SPECIFICATION

(11) **EP 2 884 856 B1**
(45) Date of publication and mention of the grant of the patent: **02.11.2016**
(21) Application number: 13748077.8
(22) Date of filing: 13.08.2013
(51) Int. Cl.: A23L 19/00, A23F 3/14, A23F 3/34, A23B 7/02

(54) **PROCESS FOR MANUFACTURING AN INFUSIBLE BEVERAGE INGREDIENT**
VERFAHREN ZUR HERSTELLUNG EINER UNAUFLÖSBAREN GETRÄNKEZUTAT
PROCÉDÉ DE FABRICATION D'UN INGRÉDIENT DE BOISSON INFUSABLE

(30) Priority: 16.08.2012 EP 12180696
(43) Date of publication of application: 24.06.2015
(73) Proprietor: Unilever PLC, London, Greater London EC4Y 0DY (GB); Unilever N.V., 3013 AL Rotterdam (NL)
(72) Inventor: BEINDORFF, Christiaan, Michaël, 3133 AT Vlaardingen (NL); COLLETT, Jonathan, George, Sharnbrook Bedfordshire MK44 1LQ (GB); JUBLOT, Lionel, 67000 Strasbourg (FR); KHALLOUFI, Seddik, 3133 AT Vlaardingen (NL)
(74) Representative: Askew, Sarah Elizabeth
(86) International application number: PCT/EP2013/066941
(87) International publication number: WO 2014/027004

(56) References cited:
- WO-A1-2012/001080
- US-A- 3 833 747

## Description

### TECHNICAL FIELD

The present invention relates to a process for manufacturing an infusible beverage ingredient. More particularly, the present invention is directed towards the manufacture of an infusible beverage ingredient comprising dried fruit pieces that do not suffer from aggregation during handling or storage.

### BACKGROUND

There are many different varieties of infusible beverage products. For example, fruit infusions are becoming increasingly popular world-wide. Fruit infusions are typically based on standard infusible beverage products (e.g. leaf tea) and have added fruit flavourings and aromas. Fruit infusions containing real fruit pieces are especially enjoyed by consumers. This is thought to be due to the healthy connotations of the fruit, the appealing visual cues that are provided by the fruit pieces and the appealing taste and aroma of the final beverage. However, such infusible beverage products can be challenging to manufacture due to the inherent sticky nature of the fruit pieces.

Stickiness is a phenomenon that reflects the tendency of some materials to agglomerate and/or adhere to contact surfaces. Dried fruit pieces have a tendency to stick together, which can make them difficult to handle. The handling properties of dried fruit pieces can pose a significant technical challenge for manufacturing processes that involve combining dried fruit pieces with other ingredients (e.g. during the manufacture of infusible beverage products containing infusible material, such as tea leaves, together with real fruit pieces). In such processes, the dried fruit pieces may aggregate into solid masses which can impede the operation of the production line. Furthermore, as the fruit pieces move through the production line they can cause the rest of the apparatus to become sticky, which can also cause production to slow and it may even be necessary to stop production in order to clean the machinery. In some instances aggregation can even lead to machine breakdown.

Stickiness has been recognised as a problem in the food industry for many years, particularly with respect to sugar-rich products such as dried fruit pieces which can easily regain moisture from humid air. The sticky behaviour of dried fruit pieces is attributed to low molecular weight sugars and organic acids. However, since these components are important for the flavour of the dried fruit pieces, their removal is problematic as it is expected to result in an unpalatable product. Furthermore, removal of these components would yield a product with a lower bulk density and hence make the product more expensive.

A proposed solution is to remove these components and replace them with sugars and acids which are less hygroscopic in nature. For example, US 3,833,747 describes a process for reducing the hygroscopicity of dehydrated fruits. In this process hygroscopic monosaccharides and fruit acids are removed from the fruit by leaching and then replaced by sucrose and edible acids.

WO 2012/001080 discloses a process for making an infusible beverage ingredient by freeze-drying unsweetened fruit pieces to a moisture content of less than 30 wt.%. The freeze-dried pieces can be mixed with leaf tea.

However, replacing the low molecular weight sugars and organic acids with sucrose and edible acids adds both cost and complexity to the manufacturing process. Furthermore, such fruit pieces will still exhibit sticky behaviour, especially in a factory environment. Therefore there remains scope for improvements in the processing of dried fruit pieces.

### SUMMARY OF THE INVENTION

The inventors have realised that the usual constraints relating to the character of dried fruit pieces (e.g. flavour, bulk density) do not necessarily apply when the fruit pieces are used as an ingredient for an infusible beverage product such as a fruit infusion.

Firstly, since the fruit pieces in such a product are not actually consumed, their palatability is not important. Indeed, the fruit pieces are primarily included to provide a visual cue to the consumer. This means that the fruit flavour of such products can be provided by a separate means (e.g. flavour granules), rather than by the fruit pieces themselves.

Secondly, during the manufacture of an infusible beverage product the ingredients are often dosed by volume rather than by weight. Therefore the lower bulk density of the fruit pieces does not adversely affect the cost of the final product.

Thus in a first aspect, the present invention provides a process for the manufacture of an infusible beverage ingredient, the process comprising the steps of:
(a) providing unsweetened fruit pieces;
(b) treating the fruit pieces so as to reduce their total sugar content by at least 35%; and then subsequently
(c) drying the fruit pieces to a moisture content of less than 30%, preferably to a moisture content of 0.1 to 10%,
wherein step (b) of the process comprises a first centrifugation of the fruit pieces.

The process involves treating the fruit pieces so as to reduce their total sugar content by at least 35%. This is achieved by a first centrifugation of the fruit pieces. One advantage of this treatment step is that it produces fruit juice as a by-product, which in itself has commercial value. Furthermore, since centrifugation removes liquid from the fruit pieces, it is thought that the resulting fruit pieces can be dried more efficiently.

The dried fruit pieces manufactured according to this process have a reduced tendency to aggregate, even when they are exposed to relatively humid environmental conditions during handling and/or storage.

As outlined above, such fruit pieces are especially suitable as an ingredient for an infusible beverage product such as a fruit infusion.

Thus a second aspect of the invention provides an infusible beverage precursor comprising an infusible beverage ingredient obtainable from the process of the first aspect of the invention, wherein the infusible beverage precursor further comprises tea plant material and/or herb plant material.

In a third aspect, the invention provides a process for the manufacture of an infusible beverage precursor according to the second aspect of the invention.

### DETAILED DESCRIPTION

### TESTS AND DEFINITIONS

As used herein the term "comprising" encompasses the terms "consisting essentially of" and "consisting of". All percentages and ratios contained herein are calculated by weight unless otherwise indicated. It should be noted that in specifying any range of values or amounts, any particular upper value or amount can be associated with any particular lower value or amount. The various features of the embodiments of the present invention referred to in individual sections above apply, as appropriate, to other sections *mutatis mutandis.* Consequently features specified in one section may be combined with features specified in other sections as appropriate. The disclosure of the invention as found herein is to be considered to cover all embodiments as found in the claims as being multiply dependent upon each other. Unless defined otherwise, all technical and scientific terms used herein have the same meaning as commonly understood by one of ordinary skill in the art (e.g. in infusible beverage manufacture).

### Fruit pieces

As used herein the term "fruit" is used in the culinary sense of the word and refers to any sweet-tasting plant product, especially those associated with seeds. For example, the fruit may be selected from the group consisting of acerola, apple, apricot, bilberry, blackberry, blackcurrant, blueberry, cherry, citron, clementine, cloudberry, cranberry, date, dragonberry, elderberry, fig, gooseberry, grape, grapefruit, greengage, guava, kiwi fruit, kumquat, lemon, lime, loganberry, lychee, mandarin, mango, medlar, melon, mulberry, nectarine, orange, papaya, passion fruit, paw paw, peach, pear, physalis, pineapple, plum, pomegranate, quince, redcurrant, raspberry, rhubarb, strawberry, tangerine, watermelon, or mixtures thereof. The fruit pieces are preferably pieces of those fruit types which at maturity have a substantial amount of fleshy tissue. Fruit pieces selected from the group consisting of: apple, apricot, blackberry, blackcurrant, blueberry, peach, pineapple, raspberry, redcurrant, strawberry and mixtures thereof are particularly preferred.

The fruit pieces are pieces of a food-grade fruit. For example, they can be fresh fruit pieces, canned fruit pieces (e.g. in juice) and/or frozen fruit pieces (e.g. individual quick frozen (IQF)). The fruit pieces are unsweetened. As used herein the term "unsweetened fruit pieces" refers to fruit pieces without any added sugar or other sweeteners. As such, fruit pieces which have been canned in syrup are unsuitable.

The total sugar content of the fruit pieces is taken from the USDA National Nutrient Database for Standard Reference (U.S. Department of Agriculture, Agricultural Research Service 2011, Release 24). The total sugar removed during the first or second centrifugation is based on the Brix of the liquid obtained after centrifugation.

As used herein the term "dried fruit pieces" refers to fruit pieces having reduced moisture content as compared to the fresh agricultural product. In particular the term refers to fruit pieces which are dried to a moisture content of less than 30 wt %, preferably less than 20 wt % and more preferably 0.1 to 10 wt %. The dried fruit pieces are substantially insoluble in water (i.e. the dried fruit pieces will not dissolve when steeped or soaked in an aqueous liquid such as water). However, the dried fruit pieces may nonetheless release certain water-soluble substances when steeped or soaked in water, e.g. flavour and/or aroma molecules.

### Fruit peel particles

As used herein, the terms "fruit peel particles" and "particles of fruit peel" are used interchangeably, and may be particles of any food-grade fruit peel. The term "peel" encompasses the terms "rind" and "skin" and refers to the outer protective layer of a fruit, in particular the part of the fruit known in botanical terms as the exocarp. The fruit peel particles are substantially insoluble in water (i.e. they will not dissolve when steeped or soaked in an aqueous liquid such as water). However, the fruit peel particles may nevertheless release certain water-soluble substances when steeped or soaked in water, e.g. flavour and/or aroma molecules.

### Citrus peel

As used herein the term "citrus fruit" refers to fruit from a plant belonging to the genus *Citrus.* Similarly, the term "citrus peel" refers to the peel from one or more citrus fruits and encompasses the flavedo (or zest), the albedo (or pith) or a mixture thereof.

### Diameter

The fruit pieces and fruit peel particles may have heterogeneous shapes, sizes, volumes, surface areas and so on. As used herein, the term "diameter" refers to the maximum length of the fruit piece or fruit peel particle in any dimension. As such, the diameter is the length of the longest cross-section that can be cut through the body of the fruit piece or fruit peel particle. When the diameter of the fruit pieces or fruit peel particles is referred to, it is meant that at least 90% by number of the pieces or particles have that diameter, for example from 90% to 100% by number.

### Infusible beverage ingredient

As used herein the term "infusible beverage ingredient" refers to a food-grade substance that when steeped or soaked in an aqueous liquid (e.g. water) releases certain soluble substances into the liquid, e.g. flavour and/or aroma molecules. It is preferred that the infusible beverage ingredient is substantially insoluble in water (i.e. the infusible beverage ingredient will not dissolve when steeped or soaked in an aqueous liquid such as water). Prior to brewing, it is preferred that the moisture content of an infusible beverage ingredient is less than 30 wt %, more preferably less than 20 wt % and most preferably 0.1 to 10 wt %.

The dried fruit pieces obtainable by the process of the present invention are an example of an infusible beverage ingredient. Other preferred examples of infusible beverage ingredients are tea plant material and/or herb plant material, with tea plant material being especially preferred.

For the purpose of the present invention "tea plant material" refers to material from the leaves and/or stem of the plant *Camellia sinensis* var. *sinensis* and/or *Camellia sinensis* var. *assamica.* The tea leaves and/or stem may be fermented ("black tea"), partially fermented ("oolong tea") or unfermented ("green tea"). The term "tea solids" refers to dry material extractable from tea plant material.

### Infusible beverage precursor

As used herein the term "infusible beverage precursor" refers to a fabricated composition suitable for preparing a beverage. An infusible beverage precursor will contain one or more infusible beverage ingredient(s). Aside from infusible beverage ingredients, the infusible beverage precursor may additionally comprise other food-grade ingredients such as sugars, salts, sweeteners, flavourings, colourants and/or aromas.

It is preferred that the mass of the infusible beverage precursor is at least 0.5 g as smaller amounts are difficult to accurately portion and dose. More preferably the mass of the infusible beverage precursor is at least 0.7 g, most preferably at least 0.9 g. Preferably the mass of the infusible beverage precursor is less than 6 g as larger amounts are inconvenient to store and/or handle. More preferably the mass of the infusible beverage precursor is less than 5 g.

The infusible beverage precursor may be contacted with an aqueous liquid such as water to provide a beverage. This process is referred to as brewing. Brewing can be carried out at any temperature, preferably the brewing temperature is at least 40°C, more preferably at least 55°C, most preferably at least 70°C. Preferably the brewing temperature is less than 120°C, more preferably less than 100°C.

### Beverage

As used herein the term "beverage" refers to a substantially aqueous drinkable composition suitable for human consumption. Preferably the beverage comprises at least 85 wt % water, more preferably at least 90 wt % water and most preferably from 95 to 99 wt % water. A "tea-based beverage" refers to a beverage comprising at least 0.01 wt % tea solids. Preferably the tea-based beverage comprises from 0.04 to 3 wt % tea solids, more preferably from 0.06 to 2 wt %, most preferably from 0.1 to 1 wt %.

### Stickiness score

In order to assess the stickiness of fruit pieces in a quantitative manner, a stickiness score was developed. In order to assign a stickiness score, a series of tests were performed.

### Equilibration at fixed water activities

Dried fruit pieces were equilibrated for at least 2 weeks at a fixed water activity (a_{w}) prior to performing the necessary tests to assign a stickiness score. Such equilibration was achieved by apportioning the fruit pieces into Petri dishes followed by storage of the samples within a sealed container above a saturated aqueous salt solution. As illustrated in Table 1, the desired water activity was achieved by selecting an appropriate salt solution.

**TABLE 1: Water activity of saturated salt solutions**

| **Salt solution** | **Water activity (a_{w})** |
|---|---|
| Magnesium chloride | 0.36 |
| Magnesium nitrate | 0.52 |
| Sodium nitrite | 0.64 |

### Blow test

A blow test was adapted from the method described in Paterson A.H.J., Brooks G.F. & Bronlund J.E. (2001) "The blow test for measuring the stickiness of powders" Conference of Food Engineeting 2001 pp. 408-414.

The blow test utilises compressed air to assess how easily fruit pieces flow. The air flow is channelled through an aperture 2 mm in diameter positioned 12 mm above the sample surface at an angle of 45°. A pressure gauge is used to monitor the pressure of the air flow through the aperture. The gauge pressure is manually read when the following three criteria are met:
(i) movement of fruit pieces on the surface of the sample observed;
(ii) movement of non-surface fruit pieces observed; and
(iii) fruit pieces displaced such that the bottom of the Petri dish becomes visible.

As illustrated in Table 2, a provisional stickiness score was allocated to a sample depending on the result of the blow test. The gauge used to measure the air pressure was zero referenced to atmospheric pressure (i.e. the gauge measures the pressure above atmospheric pressure). The maximum gauge pressure capable of being measured was 1 bar (i.e. 1 bar above atmospheric pressure). If any of the abovementioned criteria had not been met by the time this pressure was achieved, the gauge pressure necessary to achieve said criteria was judged to be >1 bar.

**TABLE 2: Provisional stickiness scores**

| **Gauge pressure** | **Criterion (i)** | **Criterion (ii)** | **Criterion (iii)** |
|---|---|---|---|
| 0 to 0.33 bar | 1 | 1 | 1 |
| 0.33 to 0.66 bar | 2 | 2 | 1 |
| 0.66 to 1 bar | 3 | 2 | 2 |
| >1 bar | 3 | 3 | 2 |

The stickiness score from the blow test represents the minimum final stickiness score that can be allocated to a sample. For example, if a sample is assigned a provisional stickiness score of "2" based on this test, it cannot subsequently be assigned a lower stickiness score of "1" based on further tests. Nevertheless, the sample can subsequently be assigned a higher stickiness score (e.g. a score of "3") based on further tests.

### Break-up test

Fruit pieces equilibrated to a specific water activity in a Perti dish were sometimes in the form of an agglomerated mass which, aside from a few pieces on the surface, could not be moved by the blow test. A Universal Materials Testing Instrument (Instron) was used to measure the force required to break up agglomerated fruit pieces.

To perform the break-up test, the Instron Universal Materials Testing Instrument was set up with a 100 N load cell and three-point bend geometry. An agglomerated sample in a Petri dish was loaded by tipping the Petri dish such that the base of the Petri dish was in a vertical orientation. The test was operated in compression, with the force being measured during a test length of 10 mm and at a speed of 50 mm/min. The sample was rotated to allow a maximum of three tests to be performed. The measured force is based on the plateau force and not the initial peak. Further scoring of stickiness was made based on a combination of such force measurements, together with observations regarding the manner in which the mass broke up (see Table 3).

**Table 3: Break-up test and stickiness score**

| **Observed behaviour in break-up test** | **Stickiness score** |
|---|---|
| Sample does not remain in Petri dish and could not be tested | 1 |
| Test causes sample to break apart and flow out of Petri dish or very low force measured (<0.3 N) | 2 |
| Sample remains in Petri dish and moderate force measured (0.3 to 1.2 N) | 3 |
| Sample remains in Petri dish and high force measured (>1.2 N) Agglomerated mass cracks during test | 4 |
| Sample remains in Petri dish and high force measured (>1.2 N) Agglomerated mass deforms plastically with no cracking | 5 |

### Sticky point temperature

A third test was performed in some instances in order to further refine the stickiness score assigned to a particular sample. This test involved using a vane rheometer to determine sticky point temperature (Tₛ) (this is essentially the temperature at which a substance develops stickiness). Tₛ was only determined for samples already assigned a stickiness score of 1 to 3 based on the blow test and the break-up test.

### Summary of stickiness scores

The final stickiness score assigned to a sample was based on one or more of the above tests. Table 4 summarises the typical sample characteristics associated with each score. Where a sample was found to fit between two stickiness score definitions (e.g. due to subtle differences which meant they could be classified by either score) they were assigned an intermediate stickiness score. For example, a sample with a stickiness score of "2.5" has sample characteristics somewhere between those described for a stickiness score of "2" and those described for a stickiness score of "3".

**TABLE 4: Summary of stickiness scores**

| **Stickiness score** | **Definition** | **Sample characteristics** | **Sticky point temperature** |
|---|---|---|---|
| 1 | Not sticky | Fruit pieces do not form agglomerates and flow easily. | Not detectable |
| 2 | Not sticky | Fruit pieces form agglomerates which can be broken up easily. | >30°C |
| 3 | Moderately sticky | Fruit pieces form agglomerates which break up easily into small clumps under mechanical agitation. These small clumps are easily broken into individual pieces. | >30°C |
| 4 | Sticky | Fruit pieces form agglomerates which break up under mechanical agitation into large clumps. These large clumps can then be broken up into smaller clumps, but not individual pieces. | ≤25°C |
| 5 | Very sticky | Fruit pieces will form agglomerates which will deform under mechanical agitation rather than break apart into clumps. | Not determined |

### THE PROCESS

A first aspect of the present invention provides a process for the manufacture of an infusible beverage ingredient. This process enables the manufacture of an infusible beverage ingredient comprising dried fruit pieces which have a reduced tendency to aggregate and/or form agglomerates. In particular, the process comprises the steps of:
(a) providing unsweetened fruit pieces;
(b) treating the fruit pieces so as to reduce their total sugar content by at least 35%; and then subsequently
(c) drying the fruit pieces to a moisture content of less than 30%, preferably to a moisture content of 0.1 to 10%,
wherein step (b) of the process comprises a first centrifugation of the fruit pieces.

Without wishing to be bound by theory, it is thought that when dried fruit pieces come into contact with water (e.g. when they are exposed to a humid environment), certain low molecular weight sugars and/or organic acids present therein become partly solubilised, thus forming an adherent layer on the surface of the fruit pieces. The present inventors have found that it is possible to reduce and/or prevent the aggregation of fruit pieces by processing them in a particular way prior to drying them to a moisture content of less than 30%.

We have found that it is not necessary to remove all of the sugars from the fruit pieces in order to achieve the benefit of improved handling due to reduced aggregation. Fruit pieces with acceptable stickiness scores are obtained by reducing their total sugar content by at least 35%. However, particularly where the fruit pieces are to be stored and/or handled in environments having moderate or even high humidity levels, it is preferred that the total sugar content of the fruit pieces is reduced by at least 40%, preferably by at least 50%.

A first centrifugation is sufficient to achieve an acceptable stickiness score. However, further improvements are possible if the first centrifugation is followed by immersion of the fruit pieces in water. Where such a step is included, the fruit pieces will ordinarily be drained afterwards, since this allows the removal of excess water prior to drying. This can be achieved, for example, by allowing the water to drain through a mesh with an appropriate hole size (i.e. a hole size selected such that the fruit pieces will be retained by the mesh).

In a particularly preferred embodiment, immersion of the fruit pieces in water consists of blanching the fruit pieces. Blanching (i.e. briefly plunging the fruit pieces into hot water and then immediately cooling them) is thought to improve the appearance of the fruit pieces by slowing or halting the action of enzymes which might otherwise affect the colour of the fruit pieces. It is also postulated that the sugars in the fruit pieces could have higher solubility in hot water than in cold water, and that blanching can thus potentially reduce the sugar content of the fruit pieces to a greater extent than immersion in cold or tepid water.

In certain preferred embodiments, a second centrifugation is performed following immersion of the fruit pieces in water. This second centrifugation removes residual water more effectively than draining alone, and may additionally remove yet more sugar from the fruit pieces. Thus in a particularly preferred embodiment, step (b) comprises a first centrifugation followed by immersion of the fruit pieces in water and then a second centrifugation.

The speed and duration of the first centrifugation must be sufficient to reduce the total sugar content of the fruit pieces by at least 35%. Centrifugation for 0.5 to 20 minutes at 100 to 1500 rpm is particularly preferred.

The speed and duration of the second centrifugation should be sufficient to remove residual water. For convenience, it is preferred to use the same parameters as for the first centrifugation.

Without wishing to be bound by theory, it is believed that centrifugation and/or immersion in water may also remove certain other water soluble ingredients which are implicated in the sticky behaviour of fruit pieces (e.g. organic acids).

Infusible beverage ingredients are typically dried to low moisture content. Such dried ingredients may be easier to handle than non-dried ingredients and/or may be preserved for longer periods of storage. Therefore the process comprises the step of drying the fruit pieces to a moisture content of less than 30 wt %, preferably to a moisture content of less than 20 wt%, more preferably to a moisture content of 0.1 to 10 wt %. Any suitable drying method may be used, with preferred methods including freeze-drying, air-drying, vacuum-drying, vacuum microwave drying, supercritical drying or combinations thereof.

Small fruit pieces having a relatively large surface area are thought to be especially prone to aggregation, particularly if they have an irregular shape. Therefore in certain embodiments the present invention is particularly directed towards a process for manufacturing small fruit pieces with improved handling and/or storage properties. Nevertheless, the fruit pieces should preferably be of a sufficient size to be noticeable to a consumer. Thus it is preferred that the fruit pieces provided in step (a) are no more than 20 mm in diameter, preferably 0.5 mm to 16 mm in diameter, more preferably 1 mm to 12 mm in diameter.

It is possible to reduce and/or prevent the aggregation of fruit pieces still further by coating the fruit pieces with a coating comprising particles of fruit peel of a specific size. Without wishing to be bound by theory, it is believed that the coating of fruit peel particles acts as a barrier, reducing the number of contact points between the surfaces of the fruit pieces. In order to ensure that the particles of fruit peel act in this manner, it has been found that they must be applied prior to the fruit pieces being dried to a moisture content of less than 30 wt %.

The coating particles comprise particles of fruit peel. Preferably the coating particles consist essentially of particles of fruit peel, more preferable the coating particles consist of particles of fruit peel. The fruit peel particles will be less than 1.5 mm in diameter. Smaller sizes of particles are less visible on the surface of the fruit pieces, which means that the fruit pieces have a more natural appearance. Therefore, it is preferred that the particles of fruit peel are from 0.05 mm to 1 mm in diameter, more preferably from 0.1 mm to 0.75 mm in diameter. In any case, the particles of fruit peel will usually be of a smaller diameter than the fruit pieces they are being used to coat.

The particles of fruit peel may be particles of any food-grade fruit peel. From a standpoint of sustainability, the fruit peel particles are preferably particles of citrus peel, since citrus peel is a by-product left over after juice extraction. The citrus peel may be from any citrus fruit, with preferred citrus peels including clementine, grapefruit, lemon, lime, mandarin, orange, tangerine or a mixture thereof. Due to their light colour, lemon peel particles are less visible on the surface of the fruit pieces and such fruit pieces therefore have a natural appearance that is thought to be preferred by some consumers. Thus in a particularly preferred embodiment, the fruit peel particles are particles of lemon peel.

### THE INFUSIBLE BEVERAGE PRECURSOR

In a second aspect, the invention relates to an infusible beverage precursor comprising an infusible beverage ingredient obtainable from the process of the first aspect of the invention, wherein the infusible beverage precursor further comprises tea plant material and/or herb plant material.

For convenience of use, it is preferred that the infusible beverage precursor is packaged, preferably in a porous container. For example, suitable containers for the beverage precursor include infusion packets, cartridges for beverage brewing machines, tea sticks and the like. In a particularly preferred embodiment, the beverage precursor is packaged in an infusion packet (e.g. a tea bag).

In a third aspect, the invention provides a process for the manufacture of an infusible beverage precursor wherein an infusible beverage ingredient obtainable from the process of the invention is combined with tea plant material and/or herb plant material.

### EXAMPLES

The following non-limiting examples illustrate the present invention.

### Example 1

In a first trial, various treatment regimes were assessed for their influence on the stickiness of fruit pieces. These treatments (e.g. centrifugation, washing, blanching, coating or combinations thereof) were all performed prior to drying the fruit pieces.

### Fruit pieces

Fresh pineapples were obtained from a local supermarket. The fresh pineapples were peeled and de-cored. The remaining flesh was cut into cubes approximately 1 cm³ in size (i.e. 1 cm x 1 cm x 1 cm) using a Dynacube vegetable cutter (Dynamic SA). Surplus juice was removed.

### First centrifugation (C1)

Fresh pineapple pieces were centrifuged with a pilot plant centrifuge (900 rpm for 2 min) to give centrifuged pineapple pieces. As a next step, these centrifuged pineapple pieces were either air-dried (AD), washed (W), blanched (B) or coated with lemon peel particles (LP).

### Washing (W)

Centrifuged pineapple pieces (∼1.4 kg) were washed in cold tap water (∼7 litres) for 10 min with gentle stirring, and then drained (e.g. using a colander or a sieve).

### Blanching (B)

Centrifuged pineapple pieces were placed in metallic sieve cages (∼1.4 kg per cage) and blanched in boiling tap water (∼3.5 litres of water for two cages of pineapple pieces) for 1.5 minutes. The cages were then plunged into cold water to cool the pineapple pieces. Following cooling, the cages were removed from the water in order to drain the pineapple pieces.

### Coating with lemon peel particles (LP)

Lemons were obtained from a local supermarket. The peel (flavedo and albedo) was removed and cut into small pieces (with an area of approximately 1 cm x 1 cm). The lemon peel was then freeze-dried to constant weight. The dried lemon peel pieces were milled in a Moulinex kitchen machine, resulting in a free-flowing powder. This powder was sieved through a 500 µm sieve to give particulate coating material.

An excess of lemon peel particles was combined with ∼100 g of centrifuged pineapple pieces. The coated pineapple pieces were then air-dried. Following drying, excess coating material was removed if necessary. The coated dried pineapple pieces typically comprised ∼10 wt % of lemon peel particles.

### Second centrifugation (C2)

Centrifuged pineapple pieces which had been either washed (W) or blanched (B) were optionally subjected to a second centrifugation (900 rpm for 2 min).

### Drying

Following treatment (e.g. centrifugation, washing, blanching, coating or combinations thereof), the pineapple pieces were air-dried (AD) to constant weight at 70°C in a drying cabinet.

### Results

This trial demonstrates that certain treatments (e.g. centrifugation, washing, blanching, coating or combinations thereof) can reduce the stickiness of pineapple pieces. Where multiple treatments were performed, these were carried out in the following order:
1. first centrifugation (C1);
2. washing (W) or blanching (B) or coating (LP);
3. second centrifugation (C2).

The pineapple pieces were air-dried once all of the appropriate treatments had been performed. The dried pineapple pieces were equilibrated for at least 2 weeks at a fixed water activity (a_{w}) prior to the assignment of a stickiness score. The tests used to assign a stickiness score were carried out as described above. Fresh pineapple pieces which had been air-dried without being subjected to any treatment were included as a control sample. The results of the first trial are summarised in Table 5.

**TABLE 5: Results of trial 1**

| **Sample ID** | **Fruit pieces** | **Treatments** | | | | | **Drying method** | **Stickiness score** | | |
|---|---|---|---|---|---|---|---|---|---|---|
| | | **C1** | **W** | **B** | **C2** | **LP** | | **a_{w} = 0.36** | **a_{w} = 0.52** | **a_{w} = 0.64** |
| T1-309 | Fresh pineapple | | | | | | AD | 3 | 4 | 4 |
| T1-310 | Fresh pineapple | X | | | | | AD | 2.5 | 3.5 | 3.5 |
| T1-311 | Fresh pineapple | X | X | | | | AD | 2.5 | 3 | 3 |
| T1-312 | Fresh pineapple | X | | X | | | AD | 2 | 3.5 | 3.5 |
| T1-313 | Fresh pineapple | X | X | | X | | AD | 2.5 | 3 | 3 |
| T1-314 | Fresh pineapple | X | | X | X | | AD | 2 | 2.5 | 2.5 |
| T1-318 | Fresh pineapple | X | | | | X | AD | 1 | 2.5 | 2.5 |

A treatment is considered to have had an effect on stickiness if it results in fruit pieces which have a different stickiness score to the control (in this case sample T1-309) at a given water activity level. For example, sample T1-314 has a lower stickiness score than sample T1-309 for all of the water activity levels investigated. Therefore the treatment regime associated with this sample (i.e. a first centrifugation followed by blanching and then a second centrifugation) is judged to be effective at reducing stickiness.

### Example 2

In a second trial, treated fruit pieces were dried by different methods to determine whether or not this influenced the stickiness of the dried fruit pieces.

### Sample preparation

Sample preparation was essentially as described in Example 1 above. Briefly, fresh pineapple pieces (∼1 cm³) were subjected to a first centrifugation and then optionally coated with lemon peel particles prior to being dried. The pineapple pieces were either air-dried (AD) at 70°C in a drying cabinet or freeze-dried (FD) to constant weight. The dried pineapple pieces were equilibrated for at least 2 weeks at a fixed water activity (a_{w}) prior to the assignment of a stickiness score.

### Results

The results of the second trial are summarised in Table 6. The tests used to assign a stickiness score were carried out as described above. Fresh pineapple pieces which had been air-dried or freeze-dried without being subjected to any treatment were included as control samples.

**TABLE 6: Results of trial 2**

| **Sample ID** | **Fruit pieces** | **Treatments** | | **Drying method** | **Stickiness score** | | |
|---|---|---|---|---|---|---|---|
| | | **C1** | **LP** | | **a_{w} = 0.36** | **a_{w} = 0.52** | **a_{w} = 0.64** |
| T2-043 | Fresh pineapple | | | AD | 3 | 4 | 5 |
| T2-049 | Fresh pineapple | X | | AD | 2 | 2.5 | 4 |
| T2-072 | Fresh pineapple | X | X | AD | 2 | 2.5 | 3 |
| T2-050 | Fresh pineapple | | | FD | 3 | 4 | 4 |
| T2-056 | Fresh pineapple | X | | FD | 2 | 2 | 2 |
| T2-070 | Fresh pineapple | X | X | FD | 1.5 | 2 | 2 |

The results indicate that the treatments investigated are effective at reducing the stickiness of dried fruit pieces regardless of the drying method used to dry the treated fruit pieces. Both drying methods are essentially equivalent when the dried fruit pieces are equilibrated at low water activity. Freeze-drying appears to be particularly effective for producing dried fruit pieces which have low stickiness scores even when equilibrated at high water activity.

### Example 3

In a third trial, the effect of centrifugation on fruit pieces derived from different sources was investigated.

### Sample preparation

Canned pineapple rings in pineapple juice (Del Monte) and canned pineapple slices in syrup (Dole) were obtained from a local supermarket. In both cases, the pineapple was drained to remove surplus liquid and then cut into cubes. Individual quick frozen (IQF) pineapple cubes (approximately 1 cm³) were obtained from SVZ. Treatment of pineapple pieces was essentially as described in Example 1 above. Briefly, the pineapple pieces were either subjected to a first centrifugation (900 rpm, 2 min) or left untreated prior to being air-dried (AD) to constant weight at 70°C in a drying cabinet. The dried pineapple pieces were equilibrated for at least 2 weeks at a fixed water activity (a_{w}) prior to the assignment of a stickiness score.

### Results

The results of the third trial are summarised in Table 7. The tests used to assign a stickiness score were carried out as described above. Pineapple pieces from the various sources which had been air-dried without being subjected to any treatment were included as control samples.

**TABLE 7: Results of trial 3**

| **Sample ID** | **Fruit pieces** | **Treatment** | **Drying method** | **Stickiness score** | | |
|---|---|---|---|---|---|---|
| | | | | **a_{w} = 0.36** | **a_{w} = 0.52** | **a_{w} = 0.64** |
| T3-043 | Fresh pineapple | | AD | 3 | 4 | 5 |
| T3-049 | Fresh pineapple | C1 | AD | 2 | 2.5 | 4 |
| T3-075 | Canned pineapple (juice) | - | AD | 2 | 3 | 4.5 |
| T3-076 | Canned pineapple (juice) | C1 | AD | 2 | 2.5 | 3 |
| T3-117 | IQF pineapple | - | AD | 2 | 3.5 | 3.5 |
| T3-133 | IQF pineapple | C1 | AD | 2.5 | 2.5 | 2.5 |

The results indicate that centrifugation prior to drying is an effective way of producing dried pineapple pieces with reduced stickiness, especially where the fruit pieces are equilibrated at high humidity. This is true irrespective of whether the starting material is fresh, canned or frozen pineapple pieces.

### Example 4

In a fourth trial, strawberry pieces were used rather than pineapple pieces and both freeze-drying and air-drying of the fruit pieces were investigated.

### Sample preparation

Fresh strawberries were obtained from a local supermarket. Fresh strawberry pieces were obtained in essentially the same way as described for pineapple pieces (see Example 1), although the fresh strawberries were hulled before being cut into cubes rather than being peeled and de-cored. Fresh strawberry pieces (∼1 cm³) were subjected to a first centrifugation prior to being dried. The strawberry pieces were either air-dried (AD) at 70°C in a drying cabinet or freeze-dried (FD) to constant weight. The dried strawberry pieces were equilibrated for at least 2 weeks at a fixed water activity (a_{w}) prior to the assignment of a stickiness score.

### Results

The results of the fourth trial are summarised in Table 8. The tests used to assign a stickiness score were carried out as described above. Fresh strawberry pieces which had been air-dried or freeze-dried without being subjected to any treatment were included as control samples.

**TABLE 8: Results of trial 4**

| **Sample ID** | **Fruit pieces** | **Treatment** | **Drying method** | **Stickiness score** | | |
|---|---|---|---|---|---|---|
| | | | | **a_{w} = 0.36** | **a_{w} = 0.52** | **a_{w} = 0.64** |
| T4-057 | Fresh strawberry | - | AD | 2 | 4 | 4 |
| T4-058 | Fresh strawberry | C1 | AD | 2 | 3 | 3 |
| T4-064 | Fresh strawberry | - | FD | 2 | 2.5 | 3 |
| T4-065 | Fresh strawberry | C1 | FD | 1.5 | 2 | 2 |

The results indicate that centrifugation prior to drying is an effective way of producing dried strawberry pieces with reduced stickiness regardless of the method used to dry the strawberry pieces. The reduction in stickiness is especially noticeable where the strawberry pieces are equilibrated at high humidity.

### Example 5

In a fifth trial, the effect of different centrifugation regimes on the stickiness of pineapple pieces was investigated.

### Sample preparation

Fresh pineapple pieces (∼ 1 cm³) were obtained as described in Example 1. The pineapple pieces were subjected to different centrifugation regimes (500 rpm, 750 rpm or 950 rpm for 1 min or 3 min). The pineapple pieces were air-dried (AD) to constant weight at 70°C in a drying cabinet. The dried pineapple pieces were equilibrated for at least 2 weeks at a fixed water activity (a_{w}) prior to the assignment of a stickiness score.

### Results

The results of the fifth trial are summarised in Table 9. The tests used to assign a stickiness score were carried out as described above. Pineapple pieces which had been air-dried without being subjected to any treatment were included as control samples.

**TABLE 9: Results of trial 5**

| **Sample ID** | **Fruit pieces** | **Centrifugation** | **Stickiness score** | | | **Reduction in sugar content** |
|---|---|---|---|---|---|---|
| | | | **a_{w} = 0.36** | **a_{w} = 0.52** | **a_{w} = 0.64** | |
| T5-181 | Fresh pineapple | - | 2.5 | 3 | 4 | - |
| T5-175 | Fresh pineapple | 500 rpm, 1 min | 2 | 3 | 3.5 | 19% |
| T5-176 | Fresh pineapple | 500 rpm, 3 min | 2 | 3 | 3.5 | 22.5% |
| T5-177 | Fresh pineapple | 750 rpm, 1 min | 2 | 3 | 3.5 | 29.5% |
| T5-178 | Fresh pineapple | 750 rpm, 3 min | 2 | 3 | 3.5 | 34% |
| T5-179 | Fresh pineapple | 900 rpm, 1 min | 2 | 3 | 3 | 37% |
| T5-180 | Fresh pineapple | 900 rpm, 3 min | 2 | 2.5 | 3 | 43% |

The sugar content of the pineapple prior to being subjected to the different centrifugation regimes was based on the value reported in the USDA National Nutrient Database for Standard Reference. The amount of sugar removed was estimated via Brix measurements on the juice recovered following centrifugation of the fruit.

The results show that samples with a larger percentage of sugar removed have a lower stickiness score, especially at higher water activities.

## Claims

1. A process for the manufacture of an infusible beverage ingredient, the process consisting of:
(a) providing unsweetened fruit pieces;
(b) treating the fruit pieces so as to reduce their total sugar content by at least 35%; and then subsequently
(c) drying the fruit pieces to a moisture content of less than 30%, preferably to a moisture content of 0.1 to 10%,
wherein step (b) of the process comprises a first centrifugation of the fruit pieces.

2. A process as claimed in claim 1 wherein step (b) of the process comprises a first centrifugation of the fruit pieces followed by immersion of the fruit pieces in water.

3. A process as claimed in claim 2 wherein immersion of the fruit pieces in water consists of blanching the fruit pieces.

4. A process as claimed in any one of the preceding claims wherein the total sugar content of the fruit pieces is reduced by at least 40%.

5. A process as claimed in any one of the preceding claims wherein the fruit pieces provided in step (a) are no more than 20 mm in diameter.

6. A process as claimed in any one of the preceding claims wherein the fruit pieces provided in step (a) are fresh fruit pieces, canned fruit pieces and/or frozen fruit pieces.

7. A process as claimed in any one of the preceding claims wherein the fruit pieces provided in step (a) are selected from the group consisting of: apple, apricot, blackberry, blackcurrant, blueberry, peach, pineapple, raspberry, redcurrant, strawberry and mixtures thereof.

8. A process as claimed in any one of the preceding claims wherein step (b) of the process comprises a first centrifugation of the fruit pieces, followed by immersion of the fruit pieces in water and then a second centrifugation of the fruit pieces.

9. A process as claimed in any one of the preceding claims wherein the first centrifugation is for 0.5 to 20 minutes at 100 to 1500 rpm.

10. A process as claimed in claim 8 or claim 9 wherein the second centrifugation is for 0.5 to 20 minutes at 100 to 1500 rpm.

11. A process as claimed in any one of the preceding claims wherein step (b) of the process comprises the additional and subsequent steps of:
- providing coating particles which are less than 1.5 mm in diameter, and then
- mixing the fruit pieces and the coating particles to provide coated fruit pieces,
wherein the coating particles are particles of fruit peel.

12. A process as claimed in claim 11 wherein the coating particles comprise particles of citrus fruit peel, preferably particles of lemon peel.

13. An infusible beverage precursor comprising an infusible beverage ingredient obtainable from the process of any one of claims 1 to 12 and further comprising tea plant material and/or herb plant material.

14. An infusible beverage precursor as claimed in claim 13 wherein the infusible beverage precursor is packaged in an infusion packet.

15. A process for the manufacture of an infusible beverage precursor wherein an infusible beverage ingredient obtainable from the process of any one of claims 1 to 12 is combined with tea plant material and/or herb plant material.

## Patentansprüche

1. Verfahren zur Herstellung einer aufgießbaren Getränkezutat, wobei das Verfahren besteht aus
(a) Bereitstellen ungesüßter Fruchtstücke,
(b) Behandeln der Fruchtstücke, um deren Gesamtzuckergehalt um mindestens 35% herabzusetzen, und dann anschließend
(c) Trocknen der Fruchtstücke auf einen Feuchtigkeitsgehalt von weniger als 30%, vorzugsweise auf einen Feuchtigkeitsgehalt von 0,1 bis 10%,
wobei der Schritt (b) des Verfahrens ein erstes Zentrifugieren der Fruchtstücke umfasst.

2. Verfahren, wie im Anspruch 1 beansprucht, wobei der Schritt (b) des Verfahrens ein erstes Zentrifugieren der Fruchtstücke gefolgt vom Eintauchen der Fruchtstücke in Wasser umfasst.

3. Verfahren, wie im Anspruch 2 beansprucht, wobei das Eintauchen der Fruchtstücke in Wasser aus einem Blanchieren der Fruchtstücke besteht.

4. Verfahren, wie in irgendeinem der vorhergehenden Ansprüche beansprucht, wobei der Gesamtzuckergehalt der Fruchtstücke um mindestens 40% herabgesetzt wird.

5. Verfahren, wie in irgendeinem der vorhergehenden Ansprüche beansprucht, wobei die im Schritt (a) bereitgestellten Fruchtstücke nicht mehr als 20 mm Durchmesser aufweisen.

6. Verfahren, wie in irgendeinem der vorhergehenden Ansprüche beansprucht, wobei die im Schritt (a) bereitgestellten Fruchtstücke frische Fruchtstücke, konservierte Fruchtstücke und/oder gefrorene Fruchtstücke darstellen.

7. Verfahren, wie in irgendeinem der vorhergehenden Ansprüche beansprucht, wobei die im Schritt (a) bereitgestellten Fruchtstücke aus der aus Apfel, Aprikose, Brombeere, schwarzer Johannisbeere, Blaubeere, Pfirsich, Ananas, Himbeere, roter Johannisbeere, Erdbeere und Mischungen davon bestehenden Gruppe ausgewählt werden.

8. Verfahren, wie in irgendeinem der vorhergehenden Ansprüche beansprucht, wobei der Schritt (b) des Verfahrens ein erstes Zentrifugieren der Fruchtstücke, gefolgt vom Eintauchen der Fruchtstücke in Wasser, und dann ein zweites Zentrifugieren der Fruchtstücke umfasst.

9. Verfahren, wie in irgendeinem der vorhergehenden Ansprüche beansprucht, wobei das erste Zentrifugieren 0,5 bis 20 Minuten lang bei 100 bis 1500 U/min erfolgt.

10. Verfahren, wie im Anspruch 8 oder Anspruch 9 beansprucht, wobei das zweite Zentrifugieren 0,5 bis 20 Minuten bei 100 bis 1500 U/min erfolgt.

11. Verfahren, wie in irgendeinem der vorhergehenden Ansprüche beansprucht, wobei der Schritt (b) des Verfahrens die zusätzlichen und nachfolgenden Schritte des
- Bereitstellens von Beschichtungspartikeln, die weniger als 1,5 mm im Durchmesser sind, und dann
- Mischens der Fruchtstücke und der Beschichtungspartikel, um beschichtete Fruchtstücke zu liefern,
umfasst,
wobei die Beschichtungspartikel Partikel von Fruchtschale darstellen.

12. Verfahren, wie im Anspruch 11 beansprucht, wobei die Beschichtungspartikel von Zitrusfruchtschale, vorzugsweise Partikel von Zitronenschale, umfassen.

13. Aufgießbares Getränkevorprodukt, umfassend eine aufgießbare Getränkezutat, erhältlich mit dem Verfahren nach irgendeinem der Ansprüche 1 bis 12, und des Weiteren umfassend ein Teepflanzenmaterial und/oder ein Gewürzpflanzenmaterial.

14. Aufgießbares Getränkevorprodukt, wie im Anspruch 13 beansprucht, wobei das aufgießbare Getränkevorprodukt in einem Aufgusspäckchen verpackt ist.

15. Verfahren zur Herstellung eines aufgießbaren Getränkevorprodukts, wobei eine aufgießbare Getränkezutat, erhältlich nach dem Verfahren nach irgendeinem der Ansprüche 1 bis 12, mit einem Teepflanzenmaterial und/oder einem Kräuterpflanzenmaterial kombiniert wird.

## Revendications

1. Procédé pour la fabrication d'un ingrédient de boisson infusable, le procédé consistant en :
(a) la fourniture de morceaux de fruits non sucrés ;
(b) le traitement des morceaux de fruits afin de réduire leur teneur totale en sucre d'au moins 35 % ; et puis ensuite
(c) le séchage des morceaux de fruits jusqu'à une teneur en humidité inférieure à 30 %, de préférence jusqu'à une teneur en humidité de 0,1 à 10 %,
dans lequel l'étape (b) du procédé comprend une première centrifugation des morceaux de fruits.

2. Procédé selon la revendication 1, dans lequel l'étape (b) du procédé comprend une première centrifugation des morceaux de fruits suivie par une immersion des morceaux de fruits dans l'eau.

3. Procédé selon la revendication 2, dans lequel l'immersion des morceaux de fruits dans l'eau consiste à blanchir les morceaux de fruits.

4. Procédé selon l'une quelconque des revendications précédentes, dans lequel la teneur totale en sucre des morceaux de fruits est réduite d'au moins 40 %.

5. Procédé selon l'une quelconque des revendications précédentes, dans lequel les morceaux de fruits fournis dans l'étape (a) sont d'au plus 20 mm de diamètre.

6. Procédé selon l'une quelconque des revendications précédentes, dans lequel les morceaux de fruits fournis dans l'étape (a) sont des morceaux de fruits frais, des morceaux de fruits en conserve et/ou des morceaux de fruits congelés.

7. Procédé selon l'une quelconque des revendications précédentes, dans lequel les morceaux de fruits fournis dans l'étape (a) sont choisis dans le groupe constitué de : pomme, abricot, mûre, cassis, myrtille, pêche, ananas, framboise, groseille, fraise et mélanges de ceux-ci.

8. Procédé selon l'une quelconque des revendications précédentes, dans lequel l'étape (b) du procédé comprend une première centrifugation des morceaux de fruits, suivie par l'immersion des morceaux de fruits dans l'eau et ensuite une seconde centrifugation des morceaux de fruits.

9. Procédé selon l'une quelconque des revendications précédentes, dans lequel la première centrifugation se fait pendant de 0,5 à 20 minutes à de 100 à 1 500 tr/min.

10. Procédé selon la revendication 8 ou la revendication 9, dans lequel la seconde centrifugation se fait pendant de 0,5 à 20 minutes à de 100 à 1 500 tr/min.

11. Procédé selon l'une quelconque des revendications précédentes, dans lequel l'étape (b) du procédé comprend les étapes supplémentaires et subséquentes de :
- fourniture de particules de revêtement qui sont inférieures à 1,5 mm de diamètre, et ensuite
- mélange des morceaux de fruits et des particules de revêtement pour fournir des morceaux de fruits revêtus,
dans lequel les particules de revêtement sont des particules de peaux de fruits.

12. Procédé selon la revendication 11, dans lequel les particules de revêtement comprennent des particules de zestes de fruits d'agrumes de préférence des particules de zestes de citron.

13. Précurseur de boisson infusable comprenant un ingrédient de boisson infusable pouvant être obtenu à partir du procédé selon l'une quelconque des revendications 1 à 12 et comprenant de plus un matériau de plante de thé et/ou un matériau de plante d'herbe.

14. Précurseur de boisson infusable selon la revendication 13, dans lequel le précurseur de boisson infusable est emballé dans un sachet d'infusion.

15. Procédé pour la fabrication d'un précurseur de boisson infusable dans lequel un ingrédient de boisson infusable pouvant être obtenu à partir du procédé selon l'une quelconque des revendications 1 à 12 est combiné avec un matériau de plante de thé et/ou un matériau de plante d'herbe.
